# FASCICULE DE BREVET EUROPEEN

(11) **EP 3 072 817 B1**
(45) Date de publication et mention de la délivrance du brevet: **27.09.2017**
(21) Numéro de dépôt: 16157471.0
(22) Date de dépôt: 25.02.2016
(51) Int. Cl.: B64D 47/04, B64D 47/06, B64C 37/02

(54) **AERONEF MUNI D'UN SYSTEME D'ECLAIRAGE**
LUFTFAHRZEUG MIT BELEUCHTUNGSSYSTEM
AIRCRAFT PROVIDED WITH A LIGHTING SYSTEM

(30) Priorité: 27.03.2015 FR 1500618
(43) Date de publication de la demande: 28.09.2016
(73) Titulaire: Airbus Helicopters, 13725 Marignane Cedex (FR)
(72) Inventeur: Routin, Hervé, 13100 Aix en Provence (FR)
(74) Mandataire: GPI & Associés

(56) Documents cités:
- DE-A1-102009 049 112
- US-A- 5 690 408
- US-A- 6 152 588
- US-A1- 2005 041 433
- US-A1- 2011 279 007
- US-A1- 2014 254 188

## Description

La présente invention concerne un système d'éclairage d'un aéronef, et un aéronef muni d'un tel système d'éclairage. L'invention se situe donc dans le domaine technique des phares d'aéronef, et plus particulièrement dans le domaine technique des phares de giravion.

Un aéronef et notamment un giravion est usuellement muni d'une pluralité de systèmes d'éclairage embarqués pour éclairer l'environnement extérieur à l'aéronef. Dans leur généralité, de tels systèmes d'éclairage mettent en oeuvre un ou plusieurs phares et des moyens de commande de l'émission d'un faisceau lumineux par le phare.

En particulier, un aéronef peut comporter un système de signalisation permettant de signaler visuellement la présence de cet aéronef. Un tel système de signalisation peut comporter une pluralité de phares dit « feux de signalisation » fixes. L'agencement de ces feux de signalisation au niveau de multiples zones de l'aéronef implique l'utilisation d'un maillage de câbles électriques serpentant dans l'aéronef.

Un aéronef peut aussi comporter un système d'éclairage utilisé en particulier pour effectuer une opération de treuillage. Un tel système d'éclairage comprend un phare de treuillage destiné à éclairer modérément une zone.

Un phare de treuillage comprend généralement un projecteur générant un faisceau lumineux non ajustable géométriquement, ce faisceau lumineux ayant une puissance lumineuse faible et fixe. Le projecteur d'un phare de treuillage est généralement immobile.

Un aéronef peut aussi comporter un système d'éclairage utilisé en particulier durant l'atterrissage de cet aéronef. Un tel système d'éclairage comprend des phares d'atterrissage destinés à éclairer modérément une zone prédéterminée du sol en phase de vol d'approche de l'aéronef.

Un phare d'atterrissage comporte usuellement un projecteur relié électriquement à une source d'énergie électrique. Ce projecteur a usuellement une faible durée de vie, de l'ordre d'une centaine d'heures d'utilisation.

En outre, le projecteur d'un phare d'atterrissage émet généralement un faisceau lumineux présentant une faible puissance optique non ajustable, de l'ordre de 50 Watts par exemple.

De plus, ce faisceau lumineux n'est généralement pas ajustable géométriquement. Par suite, la forme du faisceau lumineux ne peut pas être réglée. Par exemple, le faisceau lumineux prend la forme d'un cône de lumière ne pouvant pas être agrandi ou rétréci pour ajuster les dimensions de la zone éclairée.

Un phare d'atterrissage est par ailleurs pourvu d'un moteur permettant d'orienter le projecteur. Le moteur est relié à des commandes manoeuvrables par un opérateur.

Un aéronef peut aussi comporter un système d'éclairage utilisé en particulier pour effectuer des recherches. Un tel système d'éclairage comprend un phare de recherche destiné à éclairer avec une forte luminosité des zones pouvant être relativement quelconques et éloignées du giravion.

Un phare de recherche comporte alors usuellement un projecteur relié électriquement à une source d'énergie électrique. Ce projecteur a usuellement une durée de vie moyenne, de l'ordre d'un millier d'heures.

En outre et pour remplir sa fonction, le projecteur d'un phare de recherche émet généralement un faisceau lumineux présentant une forte puissance optique non ajustable, de l'ordre de 70 à 140 Watts par exemple. Une telle puissance est de nature à éblouir des personnes au sol. L'utilisation d'un phare de recherche est alors interdite à faible distance de personnes au sol.

Le faisceau lumineux d'un phare de recherche est légèrement ajustable géométriquement. En effet, un phare de recherche peut comporter un dispositif de zoom nécessitant une mécanique complexe soumise à des vibrations. Par exemple, le dispositif de zoom comporte des lentilles mobiles et un système de déplacement mécanique pour déplacer ces lentilles.

Un phare de recherche est par ailleurs pourvu d'un moteur permettant d'orienter le projecteur de ce phare de recherche. Le moteur est relié à des commandes manoeuvrables par un opérateur

Par suite, aucun des phares usuellement agencés sur un giravion ne permet de générer un faisceau lumineux orientable, ayant une géométrie réglable et ayant une puissance lumineuse ajustable.

De plus, les projecteurs des phares d'un giravion est en particulier des phares de recherche et d'atterrissage sont volumineux. Un phare de recherche usuel présente un encombrement important, de l'ordre de l'encombrement d'un cube présentant des arêtes de plusieurs dizaines de centimètres par exemple. Dès lors, ces phares d'atterrissage et de recherche comportent un moteur encombrant pour pouvoir déplacer les projecteurs associés ce qui augmente de manière importante l'encombrement et la masse de l'ensemble du dispositif. Par suite, un phare d'atterrissage ou de recherche génère généralement une traînée aérodynamique importante et pénalisante en vol.

De plus, la forme du faisceau lumineux généré par ces phares de recherche et d'atterrissage n'est généralement pas ajustable en vol. Pour ajuster cette forme, le phare de recherche ou d'atterrissage peut être équipé d'un filtre posé lors d'une opération de maintenance, ou encore de volets mobiles. L'agencement de tels volets se fait au détriment de la traînée aérodynamique du phare.

En outre, un phare de recherche est relié à des câblages électriques de gros diamètre, de l'ordre de cinq centimètres par exemple. Ces câblages s'étendent dans l'aéronef sur des distances importantes. Par suite, un phare de recherche nécessite la mise en oeuvre d'une installation électrique imposante et lourde. Par ailleurs, cette installation électrique peut générer des interférences électromagnétiques gênantes pour d'autres équipements.

La présente invention vise à réduire la traînée aérodynamique d'un phare muni d'un projecteur et d'un moteur, et en particulier d'un phare de recherche.

Le document US 2013/335.989 est éloigné de l'état de la technique répondant à cette problématique. En effet, le document US 2013/335.989 décrit un phare comprenant un projecteur fixe relié par au moins une fibre optique à un système laser déporté. Ce système laser comporte plusieurs sources laser pour générer un faisceau laser ayant une couleur bleu-violet. Ce faisceau possède une longueur d'onde par exemple de l'ordre 405 nm (nanomètres).

Dès lors, le projecteur inclut un moyen d'émission de lumière pour émettre une lumière blanche. Ce moyen d'émission de lumière est muni d'un conducteur de chaleur placé en amont de particules de phosphore. Chaque faisceau laser irradie le conducteur de chaleur pour que les particules de phosphore émettent de la lumière. Le phare émet alors une lumière blanche résultant du mélange de la lumière bleu-violet émise par le système laser et de la lumière émise par les particules de phosphore excitées.

D'autres documents sont éloignés de la problématique de l'invention.

Ainsi, le document WO2013052178 décrit un drone recevant de la puissance électrique sous la forme d'une lumière transmise par une fibre optique. Le drone comporte un récepteur qui convertit une partie de la lumière émise sous une autre forme de puissance, en particulier sous la forme d'une puissance électrique.

Le document US5796890 décrit un dispositif transmettant un signal optique de manière bidirectionnelle entre deux stations distantes. Le signal optique peut être converti pour fournir une puissance électrique et un signal de contrôle électrique.

Le document US 2014/168.940 décrit un système muni d'une lentille interposée entre une fibre optique et une unité d'émission de lumière.

Le document WO 2012/027.851 décrit un système muni d'une source de lumière comprenant une diode électroluminescente. De plus, le système comporte une lentille à divergence modifiable.

Le document US 8.095.014 décrit un système et un procédé pour transmettre des données de manière bidirectionnelle entre une station sol et une station mobile.

Le document FR2814434 décrit un feu de position latéral d'un rotor basculant.

Le document WO 2014/145465 est cité à titre d'information. Ce document décrit un dispositif ophtalmique et ne se situe donc pas dans le domaine technique de l'invention, à savoir le domaine des systèmes d'éclairage d'un aéronef.

Ce dispositif ophtalmique comporte trois sources laser agencées dans un générateur de lumière. Chaque source laser émet un faisceau laser. De plus, un combineur mixe les faisceaux laser pour obtenir un faisceau de lumière dirigé vers une fibre optique. La fibre optique comporte alors une sortie prenant la forme d'une aiguille creuse à insérer dans un oeil.

Les documents DE 10 2009 049112, US 2005/041433, US 6152 588, US 2014/254188, US 2011/279007 et US 5690408 sont aussi connus.

La présente invention a alors pour objet de proposer un aéronef muni d'un système d'éclairage apte à générer un faisceau lumineux à haute puissance et visant à présenter une traînée aérodynamique réduite.

L'invention concerne alors un aéronef muni d'un fuselage et d'un système d'éclairage, ce système d'éclairage comprenant au moins un projecteur dit « projecteur principal » situé à l'extérieur du fuselage de l'aéronef.

Par exemple, le projecteur principal est un phare de recherche.

De plus, le système d'éclairage comporte au moins un générateur de lumière centralisé agencé à l'intérieur du fuselage, le générateur de lumière comprenant une pluralité de sources lumineuses qui inclut au moins deux diodes laser émettant chacune un faisceau de lumière dit « faisceau initial » vers un combineur de lumière du générateur de lumière dit « combineur de lumière interne », au moins deux diodes laser émettant respectivement deux faisceaux initiaux de longueurs d'ondes différentes, le combineur de lumière interne générant à partir des faisceaux initiaux un faisceau lumineux dirigé vers une sortie optique dudit générateur de lumière, ledit générateur de lumière comprenant un système de modulation d'une fréquence d'émission dudit faisceau lumineux, ladite sortie optique dirigeant le faisceau lumineux vers une entrée optique du projecteur principal, le projecteur principal comprenant une tête optique dite « tête optique principale », la tête optique principale incluant un miroir pour séparer le faisceau lumineux en un faisceau réfléchi et un faisceau incident dirigé vers l'extérieur de la tête optique principale pour illuminer un objet, la tête optique principale comprenant un système photovoltaïque illuminé par le faisceau réfléchi pour générer un courant électrique alimentant une batterie dudit projecteur principal, le projecteur principal comportant un système de mobilité incluant au moins un moteur relié à la tête optique principale pour déplacer la tête optique principale, le moteur étant relié à la batterie, le projecteur principal comprenant un système de gestion qui réalise une analyse dudit courant électrique et qui génère un signal de commande de mobilité transmis audit moteur en fonction de ladite analyse, la tête optique principale incluant un système de traitement optique qui transforme une forme géométrique du faisceau incident pour émettre vers l'extérieur de la tête optique un faisceau de lumière dit « faisceau final » ayant une forme géométrique réglable, le spectre du faisceau final comportant uniquement une ou plusieurs raies du spectre du faisceau lumineux incident. Le spectre du faisceau final comporte donc uniquement des raies placées à des fréquences égales à des raies du spectre du faisceau lumineux incident

L'expression « la sortie optique dirigeant le faisceau lumineux vers une entrée optique du projecteur principal » signifie que le système d'éclairage permet la circulation du faisceau lumineux de la sortie optique du générateur de lumière jusqu'à l'entrée optique de la tête optique principale.

De plus, le terme « principal » ou « principale » désigne une partie constitutive du projecteur principal

Le générateur de lumière comporte donc une pluralité de sources lumineuses.

Plusieurs sources lumineuses comprennent chacune une diode laser émettant un faisceau de lumière de type faisceau laser. Une diode laser présente l'avantage d'émettre un faisceau laser à une puissance relativement importante avec une faible surface d'émission. Le faisceau laser émis par une diode laser peut en outre être facilement traité pour être dirigé vers une fibre optique par exemple.

Par conséquent, le système d'éclairage comporte un générateur de lumière muni d'au moins pluralité de diodes laser différentes. Par exemple, le générateur de lumière comporte au moins une diode laser infrarouge générant un faisceau initial dans une gamme de fréquences infrarouges, et / ou au moins une diode laser bleu générant un faisceau initial de couleur bleu, et/ ou au moins une diode laser rouge générant un faisceau initial de couleur rouge, et / ou au moins une diode laser verte générant un faisceau initial de couleur verte.

Chaque diode laser peut générer un faisceau quasi-monochromatique. L'expression quasi-monochromatique est connue de l'homme du métier et signifie que le spectre du faisceau émis par la diode laser comporte un spectre étroit d'étendue spectrale inférieure à 10 nm par exemple.

En complément, au moins une source lumineuse peut comprendre une diode électroluminescente émettant un faisceau initial.

Les faisceaux initiaux sont mixés par le combineur de lumière interne. Classiquement, un combineur mélange des faisceaux.

Dès lors, le combineur de lumière interne génère un faisceau lumineux à partir des faisceaux initiaux reçus. Un combineur muni d'au moins un miroir peut par exemple être utilisé.

Un faisceau lumineux est alors un faisceau de forte puissance réglable ayant une couleur résultant de la combinaison réalisée. Le faisceau lumineux transmis au projecteur principal est par exemple un faisceau polychromatique des raies de longueurs d'ondes comprises entre 300 et 900 nanomètres.

Un tel faisceau lumineux est par exemple un faisceau de couleur blanche d'une puissance optique de l'ordre de 100 Watts.

Ce faisceau lumineux est alors transmis à la tête optique dite « tête optique principale » d'un projecteur principal qui est situé en dehors du fuselage. Cette tête optique principale comporte un miroir qui scinde le faisceau lumineux en un faisceau réfléchi et un faisceau incident.

Le terme « miroir » désigne tout système qui permet de scinder un faisceau lumineux, et non pas exclusivement un miroir en tant que tel.

Le faisceau incident est utilisé pour générer un faisceau final éclairant l'extérieur de l'aéronef.

Dès lors, un système de traitement optique permet d'ajuster la forme géométrique du faisceau incident pour obtenir le faisceau final adéquat en sortie de cette tête optique principale. Par suite, le faisceau final émis par la tête optique principale a un spectre comprenant uniquement une ou plusieurs raies du spectre du faisceau lumineux.

Un spectre comporte au moins une raie, chaque raie étant associée à une fréquence et une intensité. Un spectre est usuellement représenté dans un diagramme comprenant en abscisse une fréquence et en ordonnée une intensité. A titre d'exemple un spectre peut comprendre une raie entre 400 nanomètres et 500 nanomètres, une raie entre 500 nanomètres et 500 nanomètres, puis une raie entre 600 nanomètres et 700 nanomètres.

L'expression « spectre comprenant uniquement une ou plusieurs raies du spectre du faisceau lumineux » signifie que le spectre du faisceau final ne comporte pas des raies placées à des fréquences pour lesquelles le spectre du faisceau lumineux ne contient pas de raies. L'absence d'une raie dans un spectre de fréquences doit alors être entendue comme représentant l'absence d'une raie à une fréquence donnée.

Selon une variante, le système de traitement optique permet d'ajuster uniquement la forme géométrique du faisceau lumineux. Le faisceau final émis par la tête optique principale a alors le même spectre que le faisceau lumineux alimentant la tête optique principale et que la longueur d'onde du faisceau incident.

Selon une variante, le système de traitement optique permet d'ajuster la forme géométrique du faisceau lumineux. De plus, le système de traitement optique peut comporter un simple filtre passe-bande pour soustraire un faisceau éclairant au faisceau lumineux ou au faisceau incident. Le faisceau final émis par la tête optique principale a alors un spectre réduit comparé faisceau lumineux alimentant la tête optique principale. Au moins une raie du spectre du faisceau lumineux n'apparait alors pas dans le spectre du faisceau final.

Indépendamment de la variante, un filtre peut aussi diminuer l'intensité associée à une raie.

Le filtre permet d'agir sur la couleur du faisceau lumineux.

Par ailleurs, le faisceau final prend la forme d'un cylindre de lumière, ou d'un cône de lumière ayant une ouverture réglable allant jusqu'à environ 60 degrés par exemple.

L'expression « faisceau initial » désigne donc chaque faisceau émis par une source lumineuse en amont du combineur de lumière interne. L'expression « faisceau lumineux » désigne le faisceau sortant d'un combineur de lumière interne. Enfin, l'expression « faisceau final » désigne le faisceau généré par un système de traitement optique.

Dès lors, l'invention propose de réaliser un faisceau de forte de puissance ayant une couleur prédéterminée au sein d'un générateur de lumière présent dans un fuselage.

Ce faisceau de forte puissance appelé faisceau lumineux est transmis à la tête optique principale du projecteur principal. La tête optique principale n'étend pas le spectre de longueurs d'onde du faisceau lumineux en n'ajoutant aucune raie à ce spectre, voire ne modifie pas la couleur du faisceau lumineux. La tête optique permet d'ajuster la forme géométrique du faisceau reçu, voire permet de le diriger vers une zone à éclairer.

Cette solution va à l'inverse de l'enseignement du document US 2013/335.989 qui vise à obtenir un faisceau lumineux à l'aide d'un émetteur de lumière agencé dans une tête optique.

La tête optique principale du projecteur principal de l'invention est dépourvue d'un tel émetteur de lumière. En effet, le faisceau lumineux reçu présente déjà la puissance et le spectre de longueurs d'onde maximales requis. Par conséquent, la tête optique principale du projecteur principal peut avoir des dimensions restreintes. A titre illustratif, la tête optique principale peut sensiblement prendre la forme d'un cube pourvu d'arêtes de cinq centimètres. En effet, le faisceau lumineux pénétrant dans la tête optique principale peut par exemple circuler dans des fibres optiques de faible diamètre, de l'ordre du millimètre par exemple. Le traitement géométrique et optique de ce faisceau peut être réalisé à l'aide lentilles de faibles dimensions et donc peu encombrantes.

L'invention permet alors de mettre en oeuvre une tête optique de petites dimensions, et donc une tête optique générant une faible traînée aérodynamique en vol.

Le générateur de lumière peut au contraire avoir des dimensions relativement encombrantes. Toutefois, cet encombrement est moins gênant an raison de l'agencement du générateur dans le fuselage.

De plus, la tête optique principale du projecteur principal ne nécessite pas d'implémenter des câblages électriques pour générer de la lumière. L'invention permet alors d'éviter les inconvénients de têtes optiques mettant en oeuvre des ampoules électriques.

Dès lors, l'invention permet d'utiliser un générateur de lumière agencé dans un fuselage pour ne pas générer une traînée aérodynamique trop importante. Ce générateur de lumière transmet un faisceau lumineux ayant les caractéristiques maximales souhaitées à au moins une tête optique d'un projecteur, ce qui permet d'agencer des têtes optiques de faibles dimensions. Lesdites caractéristiques comprennent le nombre maximal de raies de longueurs d'ondes, ainsi que la fréquence et l'intensité associées à chaque raie.

En outre, le faisceau réfléchi est utilisé pour générer un courant électrique au sein de la tête optique principale. Ce courant électrique est en effet généré par un système photovoltaïque illuminé par le faisceau réfléchi.

Le courant électrique est transmis à une batterie de stockage d'énergie électrique. La batterie peut comporter une ou plusieurs unités de stockage électrique. Dès lors, le projecteur principal est muni d'au moins un moteur électrique alimenté par la batterie pour pouvoir déplacer la tête électrique par rapport au fuselage de l'aéronef.

L'invention permet d'obtenir une tête optique principale de faibles dimensions. Dès lors, un moteur de faibles dimensions peut aussi être utilisé pour déplacer la tête optique principale dans l'espace. L'invention est donc particulièrement avantageuse dans le cadre d'un projecteur principal faisant office de phare de recherche.

De plus, le projecteur principal comprend un système de gestion qui analyse le courant électrique. Un tel système de gestion peut comporter un système électronique usuel permettant de récupérer des données au travers d'un courant électrique.

Par exemple, le système de gestion comprend un capteur mesurant l'amplitude du courant électrique et un processeur déduisant des ordres de commande à partir de cette amplitude.

En effet, le générateur de lumière comporte un système de modulation pour moduler une fréquence d'émission dudit faisceau lumineux. Cette modulation peut être réalisée à haute fréquence pour ne pas être perçue par un oeil humain. En particulier, le système de modulation agit soit sur le faisceau lumineux en aval du combineur de lumière interne, soit sur au moins un faisceau initial émis par une source lumineuse.

Cette modulation du faisceau lumineux induit la génération du courant électrique modulé, la modulation du courant électrique étant retranscrite en ordre de fonctionnement du moteur orientant la tête optique principale.

Par suite, l'aéronef comporte par exemple une commande manoeuvrable par un pilote pour orienter la tête optique principale. Cette commande est alors reliée au système de modulation. Ce système de modulation module alors le faisceau lumineux, la modulation du faisceau lumineux permettant au système de gestion de générer un signal de commande transmis au moteur.

On verra par la suite que le système de traitement optique peut aussi être commandé par le biais d'une modulation du faisceau lumineux.

L'invention peut de plus comporter une ou plusieurs des caractéristiques qui suivent.

Par exemple, chaque sortie optique est reliée à ladite entrée optique par au moins une fibre optique de liaison.

Un constructeur détermine la fibre optique adéquate selon ses connaissances générales.

Selon cette caractéristique le faisceau lumineux est conduit vers une tête optique au moins en utilisant une fibre optique. La fibre optique permet au faisceau lumineux de suivre facilement un chemin non rectiligne.

Par ailleurs, le générateur de lumière peut comporter un injecteur optique interposé entre le combineur de lumière interne et la sortie optique du générateur de lumière.

Un injecteur optique a pour fonction de rendre convergeant le faisceau lumineux.

Cet injecteur optique permet de focaliser le faisceau final vers la sortie optique pour optimiser sa transmission vers une tête optique. Par exemple, l'injecteur optique focalise le faisceau lumineux vers une fibre optique reliée à la sortie optique.

Par ailleurs le projecteur principal peut comprendre une unité de gestion ayant pour fonction d'analyser ledit courant électrique et de générer un signal de commande de traitement optique transmis audit système de traitement optique.

Cette unité de gestion et le système de gestion peuvent former une seule et même entité. En fonction de la modulation du courant électrique, cette entité génère un ordre transmis au moteur et/ou au système de traitement optique.

Par ailleurs, le système de traitement optique du projecteur principal peut comporter un dispositif de zoom en aval du miroir du projecteur principal.

Le dispositif de zoom peut être un dispositif du commerce. Le dispositif de zoom peut comporter deux lentilles mobiles l'une par rapport à l'autre pour ajuster la forme géométrique du faisceau final.

Le dispositif de zoom peut alors comprendre un actionneur contrôlé électriquement par l'unité de gestion. Dès lors, un organe de commande manipulable par un opérateur est relié au système de modulation.

Le dispositif de zoom peut aussi être contrôlé mécaniquement, au sol en particulier. Par exemple, une lentille coulisse sur un rail ou équivalent, le dispositif de zoom possédant une tirette reliée à la lentille pour la déplacer.

En outre, le projecteur principal peut comporter un collimateur de lumière dit « collimateur de lumière déporté» en amont dudit miroir.

Le collimateur de lumière déporté peut par exemple élargir ou rendre parallèle le faisceau final avant d'impacter le miroir.

Par ailleurs, le générateur de lumière peut comporter un système de refroidissement.

Le générateur de lumière permet de générer un faisceau final en utilisant une pluralité de sources lumineuses et notamment de diodes laser. En particulier, le combineur de lumière interne peut générer une lumière blanche à partir de diodes laser différentes. Néanmoins, le dispositif générateur de lumière peut chauffer lors de ce processus.

Dès lors, un système de refroidissement par air ou par liquide peut être implémenté. Par exemple, le générateur de lumière peut comporter un ventilateur. L'agencement d'un tel système de refroidissement n'est pas gênant en soi en raison de l'implantation du générateur de lumière exclusivement dans le fuselage.

En outre, le générateur de lumière peut comporter une alimentation électrique apte à être reliée à un circuit électrique, ladite alimentation électrique étant reliée à chaque source lumineuse et notamment à chaque diode laser.

L'alimentation électrique permet d'alimenter électriquement les sources lumineuses pour faire fonctionner chaque projecteur relié au générateur de lumière, et en particulier le projecteur principal.

Un système de commande peut commander l'alimentation des sources lumineuses, conjointement et/ou séparément, au travers de l'alimentation électrique.

Par ailleurs, le générateur de lumière peut comporter un système d'inhibition pour inhiber ledit faisceau lumineux.

Ce système d'inhibition peut être un système de commande du type précité qui coupe l'alimentation électrique des sources lumineuses.

Néanmoins, ce système d'inhibition peut comporter un diaphragme ou équivalent qui s'interpose sur le chemin suivi par le faisceau lumineux pour l'interrompre. Cette variante présente l'avantage d'éviter d'éteindre les sources lumineuses pour cesser d'émettre le faisceau final à l'aide du projecteur principal.

Par exemple, un bouton marche/arrêt est agencé dans un cockpit. Ce bouton est relié à un diaphragme agencé sur le chemin suivi par le faisceau lumineux.

Au démarrage, les sources lumineuses et notamment les diodes laser sont alimentées électriquement par le circuit électrique de l'aéronef. Dans la position marche, le bouton marche/arrêt ouvre un diaphragme pour laisse passer le faisceau lumineux. A l'inverse dans la position arrêt, le bouton marche/arrêt ferme le diaphragme pour bloquer le faisceau lumineux.

Un autre bouton peut alors commander le système de traitement optique. Enfin, un organe de commande peut éventuellement commander les sources lumineuses afin de régler l'intensité lumineuse voire la couleur du faisceau lumineux.

De même, le projecteur principal peut comporter un dispositif d'inhibition pour inhiber le faisceau lumineux et /ou le faisceau final au sein de la tête optique principale.

Le dispositif d'inhibition peut comporter un diaphragme ou équivalent.

Par ailleurs, le système d'éclairage peut comporter au moins un projecteur dit « projecteur secondaire » relié optiquement à au moins une diode laser du générateur de lumière, ledit projecteur secondaire comportant une tête optique dite « tête optique secondaire » émettant un faisceau éclairant ayant un spectre comportant uniquement une ou plusieurs raies du spectre du faisceau transmis par le générateur de lumière.

Chaque projecteur secondaire peut aussi être relié à une source lumineuse du type diode électroluminescente.

Par commodité, le terme « secondaire » désigne une partie constitutive d'un projecteur secondaire.

L'invention permet d'utiliser les diodes laser du générateur de lumière non seulement pour faire fonctionner un projecteur principal mais aussi d'autres projecteurs.

Par exemple, les projecteurs secondaires peuvent être des feux de position ou un feu anticollision clignotant.

Dès lors, chaque projecteur secondaire comporte une tête optique secondaire émettant un faisceau final dit « faisceau éclairant » correspondant au faisceau reçu. Ce faisceau reçu peut être un faisceau initial provenant d'une unique diode laser ou un faisceau lumineux provenant d'un combineur coopérant avec une pluralité de diodes laser. Par exemple, un feu de position est alimenté directement par une diode laser verte et un autre feu par une diode laser rouge.

Par contre, un feu anticollision de couleur blanche est alimenté par le combineur de lumière interne.

Dès lors, le générateur de lumière peut comporter par exemple au moins un miroir par projecteur secondaire pour partager un faisceau en un faisceau réfléchi dirigé vers le projecteur secondaire et un faisceau incident utilisé pour le projecteur principal.

En outre, la tête optique secondaire peut comporter un dispositif de traitement optique comprenant au moins un des organes suivants : un organe d'inhibition pour inhiber le faisceau éclairant émis par la tête optique secondaire, un système de zoom.

Par exemple, un feu anticollision émet classiquement une lumière blanche qui clignote. Un organe d'inhibition est utilisé pour faire clignoter le projecteur secondaire.

Par exemple, un cache optique bloque séquentiellement le faisceau final généré dans la tête optique du projecteur secondaire ou le faisceau transmis à la tête optique par le générateur de lumière.

Le système de zoom peut être du type du dispositif de zoom décrit précédemment.

Un filtre passe-bande peut aussi être implémenté.

Par ailleurs, l'aéronef peut comporter un drone volant à l'extérieur du fuselage, au moins un projecteur étant porté par ledit drone.

Par exemple, le générateur de lumière comporte une sortie débouchant sur l'extérieur de l'aéronef et dirigée vers le projecteur porté par le drone.

Cette caractéristique permet d'éclairer une zone distante du fuselage de l'aéronef.

L'invention et ses avantages apparaîtront avec plus de détails dans le cadre de la description qui suit avec des exemples donnés à titre illustratif en référence aux figures annexées qui représentent :
- la figure 1, une vue d'un aéronef selon l'invention,
- la figure 2, une vue présentant un aéronef comprenant deux générateurs de lumière à titre non limitatif,
- la figure 3, un schéma explicitant un système d'éclairage selon l'invention et
- la figure 4, une vue d'un aéronef comprenant au moins un drone.

Les éléments présents dans plusieurs figures distinctes sont affectés d'une seule et même référence.

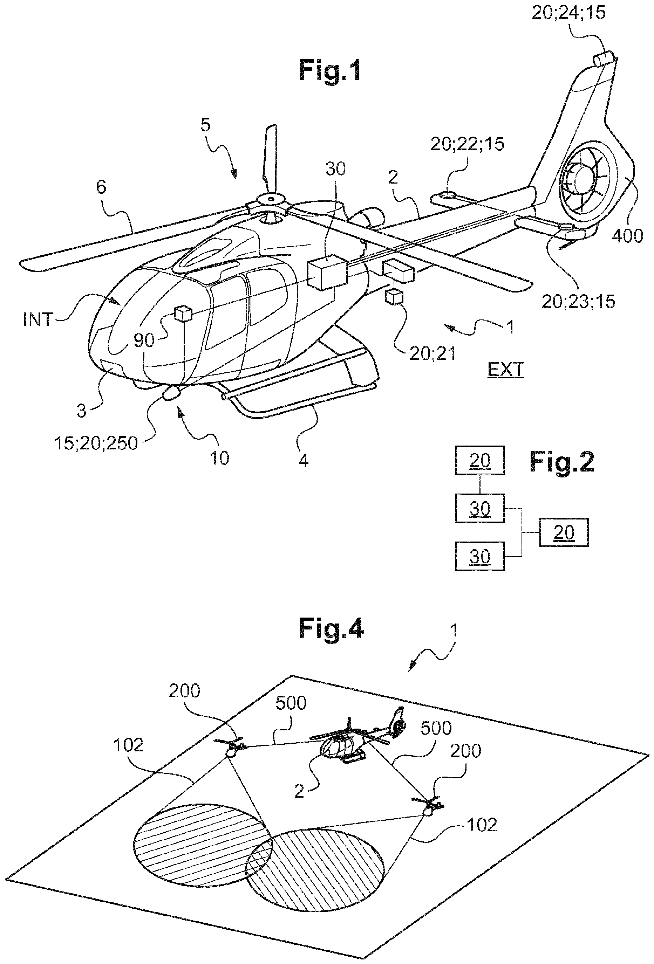

La figure 1 présente un aéronef 1 selon l'invention.

Cet aéronef 1 comporte un fuselage 2 qui s'étend longitudinalement d'un nez 3 vers une queue 400. De plus, le fuselage 2 est porté par un train d'atterrissage 4. Cet aéronef 1 est par exemple un giravion, le fuselage 2 portant au moins une voilure tournante 5 munie d'une pluralité de pales 6.

Cet aéronef 1 est muni d'un système d'éclairage 10. Le système d'éclairage 10 comprend une pluralité de projecteurs 20.

En particulier, le système d'éclairage comporte un projecteur 20 dit « projecteur principal 21 ». Ce projecteur principal 21 est favorablement un phare de recherche.

De plus, le système d'éclairage peut comporter au moins un projecteur 20 dit « projecteur secondaire 15 ». Par exemple, le système d'éclairage comporte au moins un des projecteurs secondaires suivant situé à l'extérieur EXT du fuselage : un projecteur secondaire 15 de type feu de position droit 22, un projecteur secondaire 15 de type feu de position gauche 23, un projecteur secondaire 15 de type feu de anticollision 24, un projecteur secondaire 15 de type phare d'atterrissage 250. Au moins un projecteur secondaire peut comprendre un organe agencé à l'intérieur du fuselage, tel qu'une lisseuse ou un organe éclairant une soute par exemple.

Par ailleurs, le système d'éclairage 10 comporte en outre au moins un générateur de lumière 30 agencé dans le fuselage.

En effet, la lumière émise par les projecteurs 20 n'est pas produite au sein des projecteurs, mais au sein d'au moins un générateur de lumière 30 centralisé. Dès lors, chaque projecteur peut avoir une dimension optimisée.

Par ailleurs, le système d'éclairage peut en outre comporter un système de commande 90 pour commander l'émission de lumière.

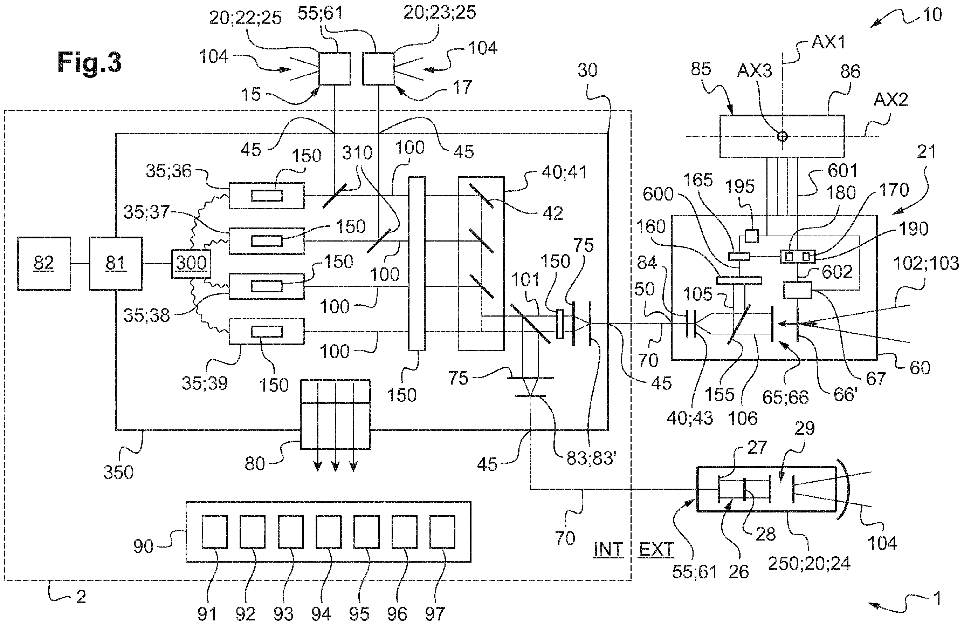

La figure 3 explicite un système d'éclairage muni d'au moins un générateur de lumière 30. En particulier, la figure 3 présente un seul générateur de lumière 30. Cependant, et en référence à la figure 2, au moins deux générateurs de lumière 30 peuvent être implémentés.

En référence à la figure 3, un générateur de lumière 30 comporte un boîtier 350 contenant une pluralité d'organes.

En particulier, le générateur de lumière 30 est muni d'au moins deux sources lumineuses émettant chacune un faisceau de lumière dit « faisceau initial 100 ».

Au moins deux sources lumineuses comprennent respectivement deux diodes laser 35 qui sont différentes l'une de l'autre en émettant respectivement deux faisceaux initiaux ayant des longueurs d'ondes différentes. En outre, chaque faisceau initial est un faisceau quasi-monochromatique.

Par exemple, le générateur de lumière 30 comporte au moins une diode laser 36 émettant un faisceau initial de couleur verte, une diode laser 37 émettant un faisceau initial de couleur rouge, une diode laser 38 émettant un faisceau initial de couleur bleu, une diode laser 39 émettant un faisceau initial infrarouge.

Au moins une diode laser peut par exemple être du type connu sous l'appellation OSRAM PLTB450B et visible sur le réseau internet à l'adresse suivante : http://www.osram-os.com/Graphics/XPic1/00088311 0.pdf/PL%20TB450B.pdf.

Les figures ne représentent que des sources lumineuses de type diode laser. Toutefois, au moins une source lumineuse peut comprendre une diode électroluminescente.

De plus, le générateur de lumière 30 possède une alimentation électrique 81 reliée à un circuit électrique 82 de l'aéronef. Cette alimentation électrique 81 est reliée électriquement à chaque source lumineuse pour transmettre un courant électrique à chaque source lumineuse 35. Eventuellement, un interrupteur 300 permet de couper l'alimentation électrique de toutes les sources lumineuses. Un tel interrupteur peut être commandé par un organe dit « premier organe 91 » d'un système de commande 90 qui est manoeuvrable par un individu. Un tel organe du système de commande peut comprendre un bouton poussoir, un bouton rotatif, un bouton translatif, un bouton à bascule, un écran tactile, un pointeur d'ordinateur, un moyen de saisie, un système de commande vocale... Les liaisons reliant chaque organe du système de commande à l'objet commandé ne sont pas représentées pour ne pas alourdir inutilement la figure 3.

De manière alternative ou complémentaire, le système de commande 90 peut comprendre un organe dit deuxième « organe 92 » pour commander au moins une source lumineuse de manière individuelle.

Selon un autre aspect, le générateur de lumière 30 peut comporter un système de refroidissement 80 pour éviter une surchauffe de ce générateur de lumière lors du fonctionnement des sources lumineuses et en particulier des diodes laser 35. Par exemple, le système de refroidissement 80 comprend au moins un ventilateur évacuant de la chaleur vers l'extérieur du générateur de lumière 30.

Pour transmettre une lumière au projecteur principal 21, le générateur de lumière comporte au moins un combineur de lumière optique 40 dit « combineur de lumière interne 41 » pour mixer au moins deux faisceaux initiaux. Usuellement, un tel combineur de lumière peut comporter un ou plusieurs miroirs 42.

Le collimateur de lumière interne peut par exemple comprendre plusieurs miroirs qui ne réfléchissent chacun qu'une onde présentant une longueur d'onde donnée.

Dès lors, le combineur de lumière interne 41 combine au moins deux faisceaux initiaux pour générer un faisceau lumineux 101. Un tel faisceau lumineux 101 peut être un faisceau quasi-polychromatique blanc.

Le faisceau lumineux 101 est alors dirigé vers au moins une sortie optique 45 du générateur de lumière 30, en particulier une sortie optique coopérant avec le projecteur principal 21.

Eventuellement, le générateur de lumière 30 comprend un injecteur optique 75. L'injecteur optique 75 75 est interposé entre le combineur de lumière interne 41 et la sortie optique 45 pour focaliser le faisceau lumineux 101 vers la sortie optique. Un injecteur optique à lentille bille ou convexe usuel peut être utilisé.

Par ailleurs, le générateur de lumière 30 est éventuellement équipé d'un système d'inhibition 83 pour inhiber le faisceau lumineux 101, à savoir pour interrompre la transmission du faisceau lumineux vers la sortie optique. Par exemple, le système d'inhibition 83 comporte un diaphragme 83' ou un masque mobile commandé par un organe dit « troisième organe 93 » du système de commande manoeuvrable par un individu. Le premier organe 91 commandant l'alimentation électrique 81 peut aussi être un élément du système d'inhibition 83.

En particulier, une sortie optique 45 dirige le faisceau lumineux 101 vers une entrée optique 50 du projecteur principal. Par exemple, le faisceau lumineux 101 chemine au moins au sein d'une fibre optique de liaison 70 entre le générateur de lumière 30 et le projecteur principal 21. Néanmoins, une telle fibre optique de liaison peut être omise en fonction du chemin à parcourir, le faisceau lumineux 101 pouvant circuler dans l'air.

Le projecteur principal 21 comprend alors une tête optique 55 dite « tête optique principale 60 » pour recevoir ce faisceau lumineux 101. La tête optique principale 60 traite le faisceau lumineux 101 pour émettre un faisceau de lumière dit « faisceau final 102 » ayant une forme géométrique 103 réglable.

Eventuellement, la tête optique principale ne modifie pas la couleur du faisceau lumineux, le spectre du faisceau final comportant uniquement une ou plusieurs raies du spectre du faisceau lumineux.

Néanmoins, la tête optique principale peut éventuellement filtrer le faisceau lumineux à l'aide d'un filtre passe-bande. Le faisceau final a alors un spectre de longueurs d'ondes comportant un nombre de raies de longueurs d'ondes inférieure au nombre de raies du spectre de longueurs d'ondes du faisceau lumineux et/ou un spectre de longueurs d'ondes comportant une raie associée à une intensité plus faible que l'intensité de la même raie dans le spectre de longueurs d'ondes du faisceau lumineux.

Ainsi, un filtre peut supprimer au moins une raie du spectre du faisceau lumineux, et/ou réduire l'intensité d'au moins une raie du spectre du faisceau lumineux.

De plus, le projecteur principal 21 comporte un système de mobilité 85 pour déplacer en rotation la tête optique principale 60 autour d'au moins un axe AX1, AX2, AX3, voire autour de trois axes.

Dès lors, le système de mobilité est pourvu d'au moins un moteur 86 relié à la tête optique principale 60. Ce moteur électrique 86 est alimenté électriquement par la tête optique principale.

En effet, la tête optique principale comporte un miroir 155 dénommé par commodité « miroir de partage ».

Le miroir de partage peut par exemple être du type miroir semi-réfléchissant ou lame séparatrice

Ce miroir 155 scinde le faisceau lumineux 101 pour obtenir un faisceau réfléchi 105 et un faisceau incident 106. Le faisceau réfléchi 105 a pour fonction de transmettre de la puissance électrique et des données au projecteur principal. Par contre le faisceau incident 106 est exploité pour générer un faisceau final 102. A titre illustratif, le faisceau lumineux présente une puissance optique de 150 Watts, le faisceau réfléchi 105 présentant une puissance optique de 30 Watts et le faisceau incident 106 présentant une puissance optique de 120 Watts.

Par conséquent, le faisceau réfléchi 105 est dirigé vers un système photovoltaïque 160. En étant illuminé par le faisceau réfléchi 105, le système photovoltaïque génère un courant électrique 600 alimentant une batterie 195. La batterie alimente alors électriquement le moteur 86.

Pour commander le moteur 86, le système d'éclairage comporte un système de modulation 150 qui module à haute fréquence le faisceau lumineux.

Un tel système de modulation peut prendre la forme des systèmes connus par l'homme du métier. Le système de modulation peut être agencé sur au moins une source laser, voire à l'entrée ou à la sortie du combineur de lumière interne 40.

Le système de modulation peut par exemple être du type électro optique tout au long du chemin optique d'un ou plusieurs faisceaux lumineux.

Cette modulation peut également être mise en place au niveau du module de contrôle d'alimentation 92 des sources lumineuses, en pilotant l'allumage et l'extinction d'une ou plusieurs sources.

De plus, le système de mobilité peut être commandé par un organe dit « quatrième organe 94 » du système de commande 90. Le quatrième organe génère un signal de déplacement transmis au système de modulation, le système de modulation modulant le faisceau lumineux en fonction du signal de déplacement reçu. Ce signal de déplacement représente un ordre de déplacement de la tête optique principale.

Pour décoder l'ordre donné, le projecteur principal 21 comprend un système de gestion 180 qui réalise une analyse du courant électrique 600 à l'aide d'un capteur de courant électrique 160.

Le capteur de courant électrique peut par exemple être du type multimètre ou pince ampérométrique.

La modulation du faisceau lumineux induit une modulation du faisceau réfléchi 105 et par conséquent du courant électrique 600. Le système de gestion 180 peut comporter un processeur ou équivalent qui exécute des instructions pour déduire un signal de commande de mobilité 601 à transmettre au moteur 86 en fonction de la modulation du courant électrique 600.

Pour traiter le faisceau lumineux 101, la tête optique principale 60 inclut un système de traitement optique 65. Ce système de traitement optique 65 comporte par exemple un dispositif de zoom 66 agencé en aval du miroir 155.

Par exemple, le dispositif de zoom 66 possède un système de lentilles 66' mobiles permettant d'adapter la forme géométrique 103 du faisceau final 102. Un système de déplacement 67 manuel ou électrique peut déplacer au moins une lentille 66'.

Par exemple, le système de déplacement 67 est pourvu d'un actionneur électrique de réglage.

Le dispositif de zoom peut par exemple être du type optotune®.

Un organe dit « cinquième organe 95 » du système de commande 90 peut commander l'actionneur. Cet actionneur électrique peut être alimenté par le circuit électrique 81 à l'aide de câbles de petites sections. Le cinquième organe génère alors un signal de réglage transmis au système de modulation, le système de modulation modulant le faisceau lumineux en fonction du signal de réglage reçu. Ce signal de réglage représente un ordre de réglage du dispositif de zoom 66.

La modulation du faisceau lumineux induit une modulation du faisceau réfléchi 105 et par conséquent du courant électrique 600. L'unité de gestion 190 peut comporter un processeur ou équivalent qui exécute des instructions pour déduire un signal de commande de mobilité 602 à transmettre au moteur 86 en fonction de la modulation du courant électrique 600.

L'unité de gestion et le système de gestion peuvent constituer une même entité physique qui contrôle à la fois le moteur 86 et l'actionneur du dispositif de zoom en fonction de la modulation du courant électrique.

En outre, le système de traitement optique 65 présenté comporte un collimateur de lumière 40 dit « collimateur de lumière déporté 43» qui est agencé en aval de l'entrée optique 50, et en amont du miroir 155.

Par exemple, un tel collimateur comporte une lentille tendant à élargir le faisceau lumineux où à le rendre parallèle.

Un dispositif d'inhibition 84 peut en outre inhiber le faisceau lumineux 101 et/ou le faisceau final 102 au sein de ladite tête optique principale 60 sur ordre d'un organe dit « sixième organe 96 » du système de commande 90.

Le dispositif d'inhibition peut comporte un diaphragme ou un masque mobile par exemple.

Outre un projecteur principal, le système d'éclairage 10 peut comporter au moins un projecteur 20 dit « projecteur secondaire 15 ». Chaque projecteur secondaire est relié optiquement à au moins une diode laser 35 du générateur de lumière 30.

Un projecteur secondaire 15 comporte une tête optique 55 dite « tête optique secondaire 25 ». Cette tête optique secondaire émet un faisceau dénommé «faisceau éclairant 104 » pour être distingué du faisceau dit « faisceau final » émis par la tête optique principale. Le faisceau éclairant émis par une tête optique secondaire présente alors un spectre comportant uniquement une ou plusieurs raies du spectre du faisceau transmis par le générateur de lumière 30 à cette tête optique secondaire.

Une tête optique secondaire 25 d'un projecteur secondaire 15 peut comporter un dispositif de traitement optique 26 comprenant au moins un des organes suivants : un organe d'inhibition 27 pour inhiber le faisceau éclairant 104 émis par la tête optique du projecteur secondaire 15, un système de zoom 29. Un collimateur 28 peut aussi être implémenté.

Toutefois, le dispositif de traitement optique 26 peut comporter un filtre passe-bande pour supprimer au moins une raie du spectre du faisceau transmis par le générateur de lumière 30, et/ou pour réduire l'intensité d'au moins une raie du spectre du faisceau transmis par le générateur de lumière 30.

Au moins un organe dit « septième organe 97 de commande » du système de commande 90 peut commander au moins un équipement du dispositif de traitement optique d'un projecteur secondaire. En outre, chaque équipement du dispositif de traitement optique peut être du type décrit dans le cadre du système de traitement optique de la tête optique principale.

De même, un projecteur secondaire peut comporter un dispositif de mobilité pour déplacer la tête optique secondaire par rapport au fuselage.

Par exemple, au moins un miroir 310 permet de scinder au moins un faisceau initial 100 en amont du combineur de lumière interne 40. Ainsi, une sortie optique peut être alimentée optiquement par un faisceau initial provenant de la diode laser 36 émettant un faisceau initial de couleur verte.

La sortie optique alimente par exemple un projecteur secondaire de type feu de position droit 22.

De même, une sortie optique peut être alimentée optiquement par un faisceau initial provenant de la diode laser 37 émettant un faisceau initial de couleur rouge pour alimenter par exemple un projecteur secondaire de type feu de position gauche 23.

Par ailleurs, le faisceau lumineux 101 peut être scindé en deux en aval du combineur de lumière interne 40 pour alimenter le projecteur principal et un projecteur secondaire de type phare d'atterrissage 250 ou feu anticollision.

Un feu anticollision peut comporter un système de traitement optique pour clignoter. Ce système de traitement optique est agencé dans le générateur de lumière ou au sein de la tête optique secondaire de ce feu anticollision.

Un phare d'atterrissage peut comporter un système de traitement optique incluant un zoom et un organe d'inhibition commandé par un organe 95 du système de commande pour éteindre ou allumer le phare d'atterrissage.

Ainsi, au démarrage de l'aéronef, un pilote peut utiliser le premier organe 91 pour mettre en fonctionnement le générateur de lumière 30. Les sources lumineuses émettent alors chacune un faisceau initial.

En l'absence de moyens d'inhibition dédiés, les projecteurs secondaires servant de feu de position 22, 23 s'allument.

Par contre, le projecteur principal 21 n'émet pas de lumière. En effet, cette émission de lumière peut être bloquée selon la variante par le système d'inhibition 83 au sein du générateur de lumière, ou encore au sein de la tête optique principale par le dispositif d'inhibition 84.

De même, un phare d'atterrissage peut être neutralisé. Par contre, le feu anticollision peut être actif.

Le pilote manoeuvre alors le système de commande pour allumer ou éteindre les phares d'atterrissage ou le projecteur principal suivant les besoins.

Ainsi, le générateur de lumière est actif au démarrage. Ce générateur de lumière génère au moins un flux de lumière transmis à au moins une tête optique. Chaque tête optique émet ce flux de lumière à l'extérieur du dispositif, sans ajouter de raie au spectre du flux de lumière. Pour éviter la propagation de la lumière à partir d'au moins un projecteur, le système d'éclairage comprend au moins un organe apte à bloquer la propagation de lumière, au sein du générateur de lumière et/ou au sein d'une tête optique.

La figure 4 présente une réalisation particulière de l'invention. Suivant cette réalisation, l'aéronef 1 comporte au moins un drone 200 volant à l'extérieur du fuselage, plus précisément deux drones sur la figure 4. Au moins un projecteur 20 est porté par le drone 200. Le générateur de lumière émet alors une lumière transmise au projecteur en traversant un espace aérien 500, cette lumière étant à son tour transmise par le drone au travers du projecteur.

Eventuellement, le générateur de lumière émet une lumière vers un drone via un projecteur principal ou un projecteur secondaire.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Aéronef (1) muni d'un fuselage (2) et d'un système d'éclairage (10), ledit système d'éclairage (10) comprenant au moins un projecteur (20) dit « projecteur principal (21) » situé à l'extérieur (EXT) du fuselage (2) dudit aéronef (1),
ledit système d'éclairage (10) comportant au moins un générateur de lumière (30) centralisé agencé à l'intérieur (INT) dudit fuselage (2), ledit générateur de lumière (30) comprenant une pluralité de sources lumineuses qui inclut au moins deux diodes laser (35) émettant chacune un faisceau de lumière dit « faisceau initial (100) » vers un combineur de lumière du générateur de lumière dit « combineur de lumière interne (41) », lesdites au moins deux diodes laser (35) émettant respectivement deux faisceaux de longueurs d'ondes différentes, ledit combineur de lumière interne (41) générant à partir desdits faisceaux initiaux (100) un faisceau lumineux (101) dirigé vers une sortie optique (45) dudit générateur de lumière (30), ledit générateur de lumière (30) comprenant un système de modulation (150) d'une fréquence d'émission dudit faisceau lumineux (101), ladite sortie optique (45) dirigeant ledit faisceau lumineux (101) vers une entrée optique (50) du projecteur principal (21), ledit projecteur principal (21) comprenant une tête optique dite « tête optique principale (60) », ladite tête optique principale (60) incluant un miroir (155) pour séparer ledit faisceau lumineux (101) en un faisceau réfléchi (105) et un faisceau incident (106) dirigé vers l'extérieur (EXT) de la tête optique principale (60) pour illuminer un objet, ladite tête optique principale (60) comprenant un système photovoltaïque (160) illuminé par ledit faisceau réfléchi (105) pour générer un courant électrique (600) alimentant une batterie (195) dudit projecteur principal (21), ledit projecteur principal (21) comportant un système de mobilité (85) incluant au moins un moteur (86) relié à ladite tête optique principale (60) pour déplacer ladite tête optique principale (60), ledit moteur (86) étant relié à ladite batterie (195), ledit projecteur principal (21) comprenant un système de gestion (180) qui réalise une analyse dudit courant électrique (600) et qui génère un signal de commande de mobilité (601) transmis audit moteur (86) en fonction de ladite analyse, ladite tête optique principale (60) incluant un système de traitement optique (65) qui transforme une forme géométrique du faisceau incident (106) pour émettre vers l'extérieur (EXT) de la tête optique principale (21) faisceau de lumière dit « faisceau final (102) » ayant une forme géométrique (103) réglable, le spectre du faisceau final comportant uniquement une ou plusieurs raies du spectre du faisceau lumineux.

2. Aéronef selon la revendication 1,
**caractérisé en ce que** chaque sortie optique (45) est reliée à ladite entrée optique (50) par au moins une fibre optique de liaison (70).

3. Aéronef selon l'une quelconque des revendications 1 à 2,
**caractérisé en ce que** ledit générateur de lumière (30) comporte un injecteur optique (75) interposé entre ledit combineur de lumière interne (41) et ladite sortie optique (45).

4. Aéronef selon l'une quelconque des revendications 1 à 3,
**caractérisé en ce que** ledit projecteur principal (21) comprend une unité de gestion (190) ayant pour fonction d'analyser ledit courant électrique (600) et de générer un signal de commande de traitement optique transmis audit système de traitement optique (65).

5. Aéronef selon l'une quelconque des revendications 1 à 4, **caractérisé en ce que** ledit système de traitement optique (65) du projecteur principal (21) comporte un dispositif de zoom (66) en aval dudit miroir (155).

6. Aéronef selon l'une quelconque des revendications 4 à 5,
**caractérisé en ce que** ledit projecteur principal (21) comporte un collimateur de lumière dit « collimateur de lumière déporté (43) » en amont dudit miroir (155).

7. Aéronef selon l'une quelconque des revendications 1 à 6,
**caractérisé en ce que** ledit générateur de lumière (30) comporte un système de refroidissement (80).

8. Aéronef selon l'une quelconque des revendications 1 à 7,
**caractérisé en ce que** ledit générateur de lumière (30) comporte une alimentation électrique (81) apte à être reliée à un circuit électrique (82), ladite alimentation électrique (81) étant reliée à chaque source lumineuse.

9. Aéronef selon l'une quelconque des revendications 1 à 8,
**caractérisé en ce que** ledit générateur de lumière (30) comporte un système d'inhibition (83) pour inhiber ledit faisceau lumineux (101).

10. Aéronef selon l'une quelconque des revendications 1 à 9,
**caractérisé en ce que** ledit faisceau lumineux (101) est un faisceau de couleur blanche.

11. Aéronef selon l'une quelconque des revendications 1 à 10,
**caractérisé en ce que** ledit projecteur principal (21) comporte un dispositif d'inhibition (84) pour inhiber ledit faisceau lumineux (101) et/ou le faisceau final (102) au sein de ladite tête optique principale (60).

12. Aéronef selon l'une quelconque des revendications 1 à 11,
**caractérisé en ce que** ledit système d'éclairage (10) comporte au moins un projecteur (20) dit « projecteur secondaire (15) » relié optiquement à au moins une diode laser (35) dudit générateur de lumière (30), ledit projecteur secondaire (15) comportant une tête optique dite « tête optique secondaire (25) » émettant un faisceau éclairant (104) ayant un spectre comportant uniquement une ou plusieurs raies du spectre du du faisceau transmis par le générateur de lumière (30).

13. Aéronef selon la revendication 12,
**caractérisé en ce que** ladite tête optique secondaire (25) comporte un dispositif de traitement optique (26) comprenant au moins un des organes suivants : un organe d'inhibition (27) pour inhiber le faisceau éclairant (104) émis par la tête optique du projecteur secondaire (15), un système de zoom (29).

14. Aéronef selon l'une quelconque des revendications 1 à 13,
**caractérisé en ce que** ledit projecteur principal (21) est un phare de recherche.

15. Aéronef selon l'une quelconque des revendications 1 à 14,
**caractérisé en ce que** ledit aéronef (1) comporte un drone (200) volant à l'extérieur du fuselage, au moins un projecteur (20) étant porté par ledit drone (200).

16. Aéronef selon l'une quelconque des revendications 1 à 15,
**caractérisé en ce que** ledit faisceau final (102) et ledit faisceau lumineux (101) ont un même spectre de longueurs d'ondes.

## Patentansprüche

1. Luftfahrzeug (1) mit einem Rumpf (2) und einem Beleuchtungssystem (10), wobei das Beleuchtungssystem (10) mindestens einen "Hauptprojektor (21)" genannten Projektor (20) aufweist, der außerhalb (EXT) des Rumpfes (2) des Luftfahrzeugs (1) angeordnet ist, wobei das Beleuchtungssystem (10) mindestens einen Lichtgenerator (30) aufweist, der mittig im Inneren (INT) des Rumpfes (2) angeordnet ist, wobei der Lichtgenerator (30) eine Mehrzahl von Lichtquellen aufweist, die mindestens zwei Laserdioden (35) umfassen, die jeweils einen "ursprünglicher Lichtstrahl (100)" genannten Lichtstrahl zu einem Lichtkombinierer des Lichtgenerators, genannt "innerer Lichtkombinierer (41)", aussenden, wobei die mindestens zwei Laserdioden (35) jeweils zwei Strahlen mit unterschiedlicher Wellenlänge aussenden, wobei der innere Lichtkombinierer (41) ausgehend von den ursprünglichen Strahlen (100) einen Lichtstrahl (101) erzeugt, der auf einen optischen Ausgang (45) des Lichtgenerators (30) gerichtet ist, wobei der Lichtgenerator (30) ein System (150) zur Modulation einer Emissionsfrequenz des Lichtstrahls (101) aufweist, wobei der optische Ausgang (45) den Lichtstrahl (101) zu einem optischen Eingang (50) des Hauptprojektors (21) leitet, wobei der Hauptprojektor (21) einen "optischer Hauptkopf (60)" genannten optischen Kopf aufweist, wobei der optische Hauptkopf (60) einen Spiegel (155) aufweist zum Aufteilen des Lichtstrahls (101) in einen reflektierten Strahl (105) und einen einfallenden Strahl (106), der nach außerhalb (EXT) des optischen Hauptkopfes (60) gerichtet ist, um ein Objekt zu beleuchten, wobei der optische Hauptkopf (60) ein photovoltaisches System (160) aufweist, das von dem reflektierten Strahl (105) beleuchtet wird, um einen elektrischen Strom (600) zu erzeugen, der eine Batterie (195) des Hauptprojektors (21) speist, wobei der Hauptprojektor (21) ein Bewegungssystem (85) aufweist, das mindestens einen Motor (86) umfasst, der mit dem optischen Hauptkopf (60) verbunden ist, um den optischen Hauptkopf (60) zu bewegen, wobei der Motor (86) mit der Batterie (195) verbunden ist, wobei der Hauptprojektor (21) eine Systemmanagementeinrichtung (180) aufweist, die eine Analyse des elektrischen Stroms (600) durchführt, und die ein Bewegungssteuersignal (601) erzeugt, das in Abhängigkeit von der Analyse an den Motor (86) übertragen wird, wobei der optische Hauptkopf (60) ein optisches Verarbeitungssystem (65) aufweist, das eine geometrische Form des einfallenden Strahls (106) umwandelt, um einen "finaler Lichtstrahl (102)" genannten Lichtstrahl nach außerhalb (EXT) des optischen Hauptkopfs (21) zu senden, wobei der Lichtstrahl eine einstellbare geometrische Form (103) aufweist, wobei das Spektrum des finalen Strahls nur einen oder mehrere Strahlen des Spektrums der Lichtstrahlen aufweist.

2. Luftfahrzeug nach Anspruch 1,
**dadurch gekennzeichnet, dass** jeder optische Ausgang (45) mit dem optischen Eingang (50) über mindestens eine optische Verbindungsfaser (70) verbunden ist.

3. Luftfahrzeug nach einem der Ansprüche 1 bis 2,
**dadurch gekennzeichnet, dass** der Lichtgenerator (30) einen optischen Injektor (75) aufweist, der zwischen dem inneren Lichtkombinierer (41) und dem optischen Ausgang (45) angeordnet ist.

4. Luftfahrzeug nach einem der Ansprüche 1 bis 3,
**dadurch gekennzeichnet, dass** der Hauptprojektor (21) eine Managementeinheit (190) aufweist, deren Funktion es ist, den elektrischen Strom (600) zu analysieren und ein Steuersignal für die optische Verarbeitung zu erzeugen, das an das optische Verarbeitungssystem (65) gesendet wird.

5. Luftfahrzeug nach einem der Ansprüche 1 bis 4,
**dadurch gekennzeichnet, dass** das optische Verarbeitungssystem (65) des Hauptprojektors (21) hinter dem Spiegel (155) eine Zoom-Vorrichtung (66) aufweist.

6. Luftfahrzeug nach einem der Ansprüche 4 bis 5,
**dadurch gekennzeichnet, dass** der Hauptprojektor (21) einen "versetzter Lichtkollimator (43)" genannten Lichtkollimator vor dem Spiegel (155) aufweist.

7. Luftfahrzeug nach einem der Ansprüche 1 bis 6,
**dadurch gekennzeichnet, dass** der Lichtgenerator (30) ein Kühlsystem (80) aufweist.

8. Luftfahrzeug nach einem der Ansprüche 1 bis 7,
**dadurch gekennzeichnet, dass** der Lichtgenerator (30) eine Stromversorgung (81) aufweist, die an einen elektrischen Stromkreis (82) angeschlossen werden kann, wobei die elektrische Stromversorgung (81) mit jeder der Lichtquellen verbunden ist.

9. Luftfahrzeug nach einem der Ansprüche 1 bis 8,
**dadurch gekennzeichnet, dass** der Lichtgenerator (30) ein Unterdrückungssystem (83) aufweist, um den Lichtstrahl (101) zu unterdrücken.

10. Luftfahrzeug nach einem der Ansprüche 1 bis 9,
**dadurch gekennzeichnet, dass** der Lichtstrahl (101) ein weißer Lichtstrahl ist.

11. Luftfahrzeug nach einem der Ansprüche 1 bis 10,
**dadurch gekennzeichnet, dass** der Hauptprojektor (21) eine Unterdrückungsvorrichtung (84) aufweist, um den Lichtstrahl (101) und/oder den finalen Lichtstrahl (102) am optischen Hauptkopf (60) zu unterdrücken.

12. Luftfahrzeug nach einem der Ansprüche 1 bis 11,
**dadurch gekennzeichnet, dass** das Beleuchtungssystem (10) mindestens einen "Nebenprojektor (15)" genannten Projektor (20) aufweist, der optisch mit mindestens einer Laserdiode (35) des Lichtgenerators (30) verbunden ist, wobei der Nebenprojektor (15) einen "optischer Nebenkopf (25)" genannten optischen Kopf aufweist, der einen Beleuchtungslichtstrahl (104) aussendet, der ein Spektrum aufweist, das nur einen oder mehrere Lichtstrahlen des Spektrums des Lichtstrahls aufweist, der von dem Lichtgenerator (30) übertragen wird.

13. Luftfahrzeug nach Anspruch 12,
**dadurch gekennzeichnet, dass** der optische Nebenkopf (25) eine Vorrichtung zur optischen Verarbeitung (26) aufweist mit mindestens einem der folgenden Elemente: einem Unterdrückungselement (27) zum Unterdrücken des Beleuchtungslichtstrahls (104), der von dem optischen Kopf des Nebenprojektors (15) ausgesendet wird, und einem Zoom-System (29).

14. Luftfahrzeug nach einem der Ansprüche 1 bis 13,
**dadurch gekennzeichnet, dass** der Hauptprojektor (21) ein Suchscheinwerfer ist.

15. Luftfahrzeug nach einem der Ansprüche 1 bis 14,
**dadurch gekennzeichnet, dass** das Luftfahrzeug (1) eine Drohne (200) aufweist, die außerhalb des Rumpfes fliegt, wobei mindestens ein Projektor (20) von dieser Drohne (200) getragen wird.

16. Luftfahrzeug nach einem der Ansprüche 1 bis 15,
**dadurch gekennzeichnet, dass** der finale Lichtstrahl (102) und der Lichtstrahl (101) dasselbe Wellenlängenspektrum aufweisen.

## Claims

1. Aircraft (1) provided with a fuselage (2) and with a lighting system (10), said lighting system (10) comprising at least one projector (20) called "main projector (21)" situated on the exterior (EXT) of the fuselage (2) of said aircraft (1),
said lighting system (10) comprising at least one centralised light generator (30) arranged on the interior (INT) of said fuselage (2), said light generator (30) comprising a plurality of light sources which include at least two laser diodes (35), each emitting a light beam called "initial beam (100)" towards a light combiner of the light generator called "internal light combiner (41)", said at least two laser diodes (35) emitting respectively two beams of different wavelengths, said internal light combiner (41) generating from said initial beams (100) a light beam (101) directed towards an optical outlet (45) of said light generator (30), said light generator (30) comprising a modulation system (150) for modulating an emission frequency of said light beam (101), said optical outlet (45) directing said light beam (101) towards an optical inlet (50) of the main projector (21), said main projector (21) comprising an optical head called "main optical head (60)", said main optical head (60) including a mirror (155) for separating said light beam (101) into a reflected beam (105) and an incident beam (106) directed towards the exterior (EXT) of the main optical head (60) for illuminating an object, said main optical head (60) comprising a photovoltaic system (160) illuminated by said reflected beam (105) for generating an electric current (600) supplying a battery (195) of said main projector (21), said main projector (21) comprising a mobility system (85) including at least one motor (86) connected to said main optical head (60) for displacing said main optical head (60), said motor (86) being connected to said battery (195), said main projector (21) comprising a management system (180) which performs an analysis of said electric current (600) and which generates a mobility control signal (601) transmitted to said motor (86) depending on said analysis, said main optical head (60) including an optical processing system (65) which transforms a geometrical shape of the incident beam (106) for emitting towards the exterior (EXT) of the main optical head (21) a light beam called "final beam (102)" having an adjustable geometrical shape (103), the spectrum of the final beam comprising only one or a plurality of lines of the spectrum of the light beam.

2. Aircraft according to claim 1,
**characterised in that** each optical outlet (45) is connected to said optical inlet (50) by at least one connecting optical fibre (70).

3. Aircraft according to any one of claims 1 to 2,
**characterised in that** said light generator (30) comprises an optical injector (75) interposed between said internal light combiner (41) and said optical outlet (45).

4. Aircraft according to any one of claims 1 to 3,
**characterised in that** said main projector (21) comprises a management unit (190) having the function of analysing said electric current (600) and of generating an optical processing control signal transmitted to said optical processing system (65).

5. Aircraft according to any one of claims 1 to 4,
**characterised in that** said optical processing system (65) of the main projector (21) comprises a zoom device (66) downstream of said mirror (155).

6. Aircraft according to any one of claims 4 to 5,
**characterised in that** said main projector (21) comprises a light collimator called "offset light collimator (43)" upstream of said mirror (155).

7. Aircraft according to any one of claims 1 to 6,
**characterised in that** said light generator (30) comprises a cooling system (80).

8. Aircraft according to any one of claims 1 to 7,
**characterised in that** said light generator (30) comprises an electrical supply (81) suitable for being connected to an electric circuit (82), said electrical supply (81) being connected to each light source.

9. Aircraft according to any one of claims 1 to 8,
**characterised in that** said light generator (30) comprises an inhibition system (83) for inhibiting said light beam (101).

10. Aircraft according to any one of claims 1 to 9,
**characterised in that** said light beam (101) is a beam of white colour.

11. Aircraft according to any one of claims 1 to 10,
**characterised in that** said main projector (21) comprises an inhibition device (84) for inhibiting said main light beam (101) and/or the final beam (102) within said main optical head (60).

12. Aircraft according to any one of claims 1 to 11,
**characterised in that** said lighting system (10) comprises at least one projector (20) called "secondary projector (15)" connected optically to at least one laser diode (35) of said light generator (30), said secondary projector (15) comprising an optical head called "secondary optical head (25)" emitting a lighting beam (104) having a spectrum comprising only one or a plurality of lines of the spectrum of the beam transmitted by the light generator (30).

13. Aircraft according to claim 12,
**characterised in that** said secondary optical head (25) comprises an optical processing device (26) comprising at least one of the following members: an inhibition member (27) for inhibiting the lighting beam (104) emitted by the optical head of the secondary projector (15), a zoom system (29).

14. Aircraft according to any one of claims 1 to 13,
**characterised in that** said main projector (21) is a searchlight.

15. Aircraft according to any one of claims 1 to 14,
**characterised in that** said aircraft (1) comprises a drone (200) flying outside the fuselage, at least one projector (20) being carried by said drone (200).

16. Aircraft according to any one of claims 1 to 15,
**characterised in that** said final beam (102) and said light beam (101) have a same wavelength spectrum.
